# FASCICULE DE BREVET EUROPEEN

(11) **EP 3 524 108 B1**
(45) Date de publication et mention de la délivrance du brevet: **20.08.2025**
(21) Numéro de dépôt: 19153965.9
(22) Date de dépôt: 28.01.2019
(51) Int. Cl.: A47J 37/12, A47J 27/14, A47J 27/18

(54) **APPAREIL DE CUISINE COMPORTANT DES MOYENS D'ALIMENTATION EN EAU D'UNE CUVE DE L'APPAREIL**
KÜCHENGERÄT, DAS WASSERZUFÜHRMITTEL ZU EINEM TANK DES GERÄTS UMFASST
KITCHEN APPLIANCE COMPRISING A MEANS FOR SUPPLYING WATER TO A TANK OF THE APPLIANCE

(30) Priorité: 13.02.2018 FR 1851198; 28.08.2018 FR 1857735
(43) Date de publication de la demande: 14.08.2019
(73) Titulaire: Illinois Tool Works Inc., Glenview, IL 60025 (US)
(72) Inventeur: BACHELEY, Denis, 39230 Saint-Lamain (FR); BRUN-COSME-GAZOT, Jean-Marc, 39230 Passenans (FR)
(74) Mandataire: HGF

(56) Documents cités:
- DE-U1- 202013 006 733
- US-A- 5 664 482
- US-B1- 6 250 215

## Description

### DOMAINE TECHNIQUE

La présente invention concerne un appareil de cuisine, et en particulier un appareil de cuisson, comportant une cuve de cuisson et des moyens d'alimentation en eau de la cuve configurés pour projeter un jet d'eau avec un angle déterminé sur une des parois de la cuve afin d'éviter des éclaboussures lors du remplissage de celle-ci.

### ETAT DE L'ART

L'état de la technique comprend notamment les documents US-A-5 664 482, DE-U1-20 2013 006733 et US-B1-6 250 215.

De nombreux appareils de cuisson professionnels possèdent une cuve de cuisson, dans laquelle des produits sont destinés à être cuisinés.

Dans certains appareils de cuisson professionnels, la cuve de cuisson peut comporter des moyens d'alimentation en eau de la cuve raccordés fluidiquement à une arrivée d'eau. Ces moyens d'alimentation sont généralement utilisés pour remplir la cuve pour la cuisson des produits ou pour le nettoyage de la cuve après son utilisation.

Par exemple, un appareil de cuisson conventionnel comprend une cuve de cuisson, de forme générale parallélépipédique, comportant une paroi de fond, ainsi qu'une paroi avant, une paroi arrière et deux parois latérales s'étendant depuis la paroi de fond. Des moyens d'alimentation sont agencés au niveau de la paroi arrière de la cuve, et sont actionnés par une commande du type tout ou rien. Ces moyens d'alimentation comportent un bec prolongeant un corps, le bec et le corps formant généralement un angle d'environ 45°.

Cependant, de tels moyens d'alimentation projettent un jet d'eau avec un angle important sur la paroi de fond de la cuve.

Ceci a pour conséquences de générer des éclaboussures, lorsque l'eau impacte le fond de la cuve.

L'invention propose une solution simple, efficace et économique à ce problème de la technologie antérieure.

### OBJECTIF DE L'INVENTION

L'invention a pour objectif de proposer un appareil de cuisine, en particulier de cuisson, comprenant une cuve de cuisson et des moyens d'alimentation en eau de la cuve, dans lequel un minimum d'éclaboussures est généré lors du remplissage de la cuve, et ce quel que soit le niveau d'eau dans la cuve.

### EXPOSE DE L'INVENTION

A cet effet, l'invention propose un appareil de cuisine, en particulier de cuisson, comportant :
- une cuve comprenant au moins une paroi dite de fond et une paroi dite périphérique s'étendant depuis et autour de ladite paroi de fond, et
- des moyens d'alimentation en eau pour remplir la cuve,
caractérisé en ce que lesdits moyens d'alimentation sont configurés pour projeter un jet d'eau avec un angle déterminé sur ladite paroi périphérique à un point d'impact entre 60% et 90% de la hauteur de ladite paroi périphérique pour minimiser les éclaboussures générées lors du remplissage de la cuve.

Avantageusement, dans un appareil de cuisine selon l'invention, il y a peu, voire aucune, éclaboussure lors du remplissage de la cuve, et ce quel que soit le niveau d'eau déjà présent dans la cuve.

En effet, l'angle du jet d'eau projeté par les moyens d'alimentation par rapport à la paroi périphérique est configuré pour minimiser les éclaboussures lors de l'utilisation desdits moyens d'alimentation.

De plus, le jet d'eau est projeté par les moyens d'alimentation sur la périphérique, et non pas sur la paroi de fond comme dans l'art antérieur, ce qui permet de minimiser les éclaboussures lors du remplissage de la cuve.

La cuve peut être de forme générale parallélépipédique. Dans ce cas, la paroi périphérique comporte une paroi dite avant, une paroi dite arrière et deux parois dites latérales.

L'appareil de cuisine peut comporter une face dite supérieure sensiblement parallèle à la paroi de fond. Dans ce cas, les moyens d'alimentation peuvent être agencés sur ladite face supérieure au niveau de la paroi avant ou d'une des parois latérales.

Les moyens d'alimentation peuvent être configurés pour projeter un jet d'eau avec un angle déterminé sur la paroi arrière.

L'angle déterminé, entre le jet d'eau et la paroi périphérique, peut être compris entre 5° et 50°. De préférence, l'angle déterminé est compris entre 10° et 30°. Par exemple, l'angle déterminé est égal à 15°.

Avantageusement, l'angle déterminé est faible de sorte qu'il n'y a aucune éclaboussure lors du remplissage de la cuve, et ce quel que soit le niveau d'eau déjà présent dans la cuve.

Les moyens d'alimentation peuvent être configurés pour fonctionner en mode tout ou rien.

Les moyens d'alimentation peuvent être configurés pour fonctionner sur la base de valeurs discrètes de débit prédéterminées.

Ceci permet avantageusement un fonctionnement optimal de l'appareil de cuisine.

Les moyens d'alimentation peuvent comprendre un élément tubulaire et monobloc.

De préférence, les moyens d'alimentation comprennent un bec prolongeant un corps, le bec et le corps formant un angle supérieur ou égal à 60°. De préférence, l'angle formé entre le bec et le corps est supérieur ou égal à 70°. Plus préférentiellement, le bec et le corps forment un angle supérieur ou égal à 80°. De préférence, l'angle formé entre le bec et le corps est inférieur ou égal à 90°.

Avantageusement, l'angle entre le corps et le bec des moyens d'alimentation est plus grand que celui des appareils de cuisine selon l'art antérieur, ce qui permet d'avoir un bec moins incliné que dans les appareils de cuisine selon l'art antérieur, et par conséquent permet de diminuer, voire empêcher, les éclaboussures lors du remplissage de la cuve.

L'appareil de cuisine peut être configuré pour que les moyens d'alimentation projettent un débit d'eau compris entre 10 L/min et 30 L/min. De préférence, l'appareil de cuisine est configuré pour que les moyens d'alimentation projettent un débit d'eau compris entre 15 L/min et 25 L/min, par exemple égal à 20 L/min.

Avantageusement, un tel débit des moyens d'alimentation permet de remplir rapidement la cuve de cuisson, tout en évitant des éclaboussures.

La plus petite distance entre les moyens d'alimentation et un plan comprenant la paroi périphérique au niveau de laquelle sont agencés les moyens d'alimentation peut être inférieure ou égale à 20 cm, de préférence inférieure ou égale à 15 cm, par exemple égale à 10 cm.

Les moyens d'alimentation peuvent comporter un orifice de sortie.

La distance entre l'orifice de sortie et la paroi de fond peut être comprise entre 25 cm et 50 cm. De préférence, la distance entre l'orifice de sortie et la paroi de fond est comprise entre 30 cm et 45 cm, par exemple égale à 35 cm.

La plus petite distance entre l'orifice de sortie et la cuve peut être inférieure ou égale à 20 cm. De préférence, la plus petite distance entre l'orifice de sortie et la cuve est inférieure ou égale à 15 cm, par exemple inférieure ou égale à 10 cm.

L'orifice de sortie peut s'étendre dans un plan sensiblement perpendiculaire à la paroi de fond.

L'orifice de sortie peut avoir un diamètre compris entre 1 cm et 6 cm. De préférence, le diamètre de l'orifice de sortie est compris entre 2 cm et 5 cm, par exemple égal à 3 cm.

La plus petite distance entre l'orifice de sortie et le plan comprenant la paroi périphérique au niveau de laquelle sont agencés les moyens d'alimentation peut être inférieure ou égale à 20 cm, de préférence inférieure ou égale à 15 cm, par exemple égale à 10 cm.

Les moyens d'alimentation peuvent également comprendre un orifice d'entrée de diamètre inférieur à celui de l'orifice de sortie.

L'orifice d'entrée peut avoir un diamètre compris entre 0,5 cm et 5 cm. De préférence, le diamètre de l'orifice d'entrée est compris entre 1 cm et 3 cm, par exemple égal à 2 cm.

Les moyens d'alimentation peuvent également comprendre un conduit s'étendant entre lesdits orifices d'entrée et de sortie. En particulier, le conduit peut avoir un diamètre évoluant progressivement entre l'orifice d'entrée et l'orifice de sortie.

De façon avantageuse, ceci permet de réduire la vitesse de l'eau passant par le conduit, tout en évitant de provoquer des perturbations dans le flux.

Le point d'impact du jet d'eau sur la paroi périphérique peut être compris entre 70% et 80% de la hauteur de ladite paroi périphérique.

Le point d'impact du jet d'eau sur la paroi périphérique peut être compris entre 10% et 40% de la longueur de ladite paroi périphérique. De préférence, le point d'impact du jet d'eau sur la paroi périphérique est compris entre 20% et 30% de la longueur de ladite paroi périphérique.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en perspective d'un appareil de cuisine selon l'invention ;
- la figure 2 est une vue schématique en perspective d'une cuve de cuisson d'un appareil de cuisine selon l'invention ;
- la figure 3 est une vue schématique en perspective des moyens d'alimentation en eau de la cuve de cuisson d'un appareil de cuisine selon l'invention ;
- la figure 4 est une vue schématique selon la coupe A-A des moyens d'alimentation en eau de la cuve de cuisson de la figure 3 ;
- la figure 5 est une vue schématique en perspective d'une partie d'un appareil de cuisine selon l'invention ;
- la figure 6 est une vue schématique de dessus d'une partie d'un appareil de cuisine selon l'invention ; et
- la figure 7 est une vue schématique d'une partie d'un appareil de cuisine selon l'invention, en fonctionnement des moyens d'alimentation en eau de la cuve de cuisson.

### DESCRIPTION DETAILLEE DE L'INVENTION

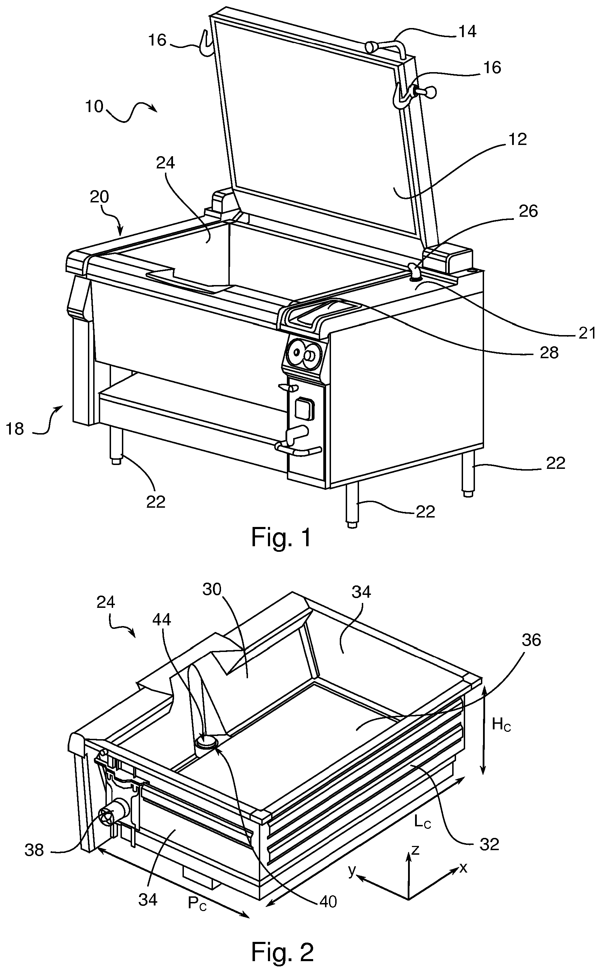

Un appareil de cuisine 10, et en particulier de cuisson, est représenté sur la figure 1. L'appareil de cuisson peut être une machine multifonction comportant par exemple des fonctions de « sauteuse », de « marmite », de « marmite à pression », c'est-à-dire de cuisson sous pression, et de « friteuse ».

L'appareil de cuisine 10 a une forme générale parallélépipédique lorsque le couvercle 12 de l'appareil est dans sa position de fermeture, la position d'ouverture dudit couvercle 12 étant représentée sur la figure 1.

Le couvercle 12 de l'appareil est monté mobile en rotation entre une position sensiblement horizontale de fermeture de l'appareil de cuisine 10 et une position sensiblement verticale d'ouverture dudit appareil.

Le couvercle 12 peut être muni de moyens de préhension 14, ici une poignée, pour que l'utilisateur puisse manier le couvercle 12 entre sa position d'ouverture et de fermeture.

Le couvercle 12 peut être également muni de moyens de blocage 16, ici des crochets, de manière à bloquer le couvercle dans sa position de fermeture de l'appareil, et ainsi permettre la cuisson sous pression.

L'appareil de cuisine 10 peut être équipé de pieds 22 d'appui sur le sol qui sont reliés à une face inférieure de l'appareil. Les pieds 22 peuvent être réglables en hauteur de manière à mettre une face supérieure 20 de l'appareil de cuisine 10 à une hauteur donnée et à faciliter le nettoyage du sol sous l'appareil. En particulier, la face supérieure 20, ainsi qu'une face avant 18, de l'appareil sont accessibles par un utilisateur.

L'appareil de cuisine 10 comporte une cuve de cuisson 24, dont le fond est destiné à être chauffé. Une telle cuve de cuisson 24 peut être réalisée en matériau métallique.

Le volume de la cuve de cuisson 24 peut être compris entre 50 litres, soit 0,05 m³, et 250 litres, soit 0,25 m³. De préférence, la cuve de cuisson 24 a un volume compris entre 100 litres, soit 0,10 m³, et 200 litres, soit 0,20 m³. Par exemple, le volume de la cuve de cuisson 24 peut être sensiblement égal à 100 litres, ou à 150 litres, soit 0,15 m³, ou à 200 litres.

L'appareil de cuisine 10 peut comprendre des moyens de chauffage (non représentés) du fond de la cuve de cuisson 24, par exemple des résistances chauffantes ou des brûleurs à gaz.

L'appareil de cuisine 10 comprend également des moyens de commande 28 de différentes fonctions de l'appareil. En particulier, les moyens de commande 28 sont configurés pour commander des fonctions de l'appareil de cuisine 10, telles que des modes de cuisson. Les moyens de commande 28 peuvent comporter un écran tactile.

Les moyens de commande 28 peuvent comprendre des moyens de régulation du chauffage du fond de la cuve de cuisson 24, qui sont généralement situés sur la face avant 18 ou sur la face supérieure 20 de l'appareil de cuisine 10 et qui sont accessibles par l'utilisateur.

La figure 2 représente plus précisément une cuve de cuisson 24 de l'appareil de cuisine 10.

La cuve de cuisson 24 est de forme générale cylindrique, par exemple à base circulaire, ovale ou polygonale. La cuve de cuisson 24 comporte une paroi inférieure plane s'étendant sensiblement horizontalement, dite paroi de fond ou paroi de cuisson 36. La face supérieure 20 de l'appareil de cuisine 10 s'étend sensiblement parallèlement à la paroi de cuisson 36. La cuve de cuisson 24 comporte également une paroi périphérique s'étendant vers le haut depuis la paroi de cuisson 36 et définissant avec celle-ci un volume destiné à contenir des produits à cuire.

Ici, la cuve de cuisson 24 a une forme générale sensiblement parallélépipédique et comporte une paroi de fond 36 rectangulaire et des parois avant 30, arrière 32 et latérales 34 rectangulaires et sensiblement verticales.

La longueur L_{C} de la paroi de cuisson 36, c'est-à-dire la dimension de la paroi de cuisson 36 selon la direction de l'axe (x) sur la figure 2, peut être comprise entre 0,8 m et 1,2 m. De préférence, la longueur L_{C} de la paroi de cuisson 36 est comprise entre 0,9 m et 1,1 m, par exemple sensiblement égale à 1,0 m. La largeur P_{C}, ou profondeur, de la paroi de cuisson 36, c'est-à-dire la dimension de la paroi de cuisson 36 selon la direction de l'axe (y) sur la figure 2, peut être comprise entre 40 cm et 80 cm. De préférence, la paroi de cuisson 36 a une largeur P_{C} comprise antre 50 cm et 70 cm, par exemple sensiblement égale à 60 cm.

La longueur L_{C} des parois avant 30 et arrière 32 peut être comprise entre 0,8 m et 1,2 m, et de préférence comprise entre 0,9 m et 1,1 m. Par exemple, les parois avant 30 et arrière 32 ont une longueur L_{C} sensiblement égale à 1,0 m. La hauteur H_{C} des parois avant 30 et arrière 32, c'est-à-dire la dimension des parois avant 30 et arrière 32 selon la direction de l'axe (z) sur la figure 2, peut être comprise entre 20 cm et 50 cm. De préférence, les parois avant 30 et arrière 32 ont une hauteur H_{C} comprise entre 25 cm et 40 cm, par exemple sensiblement égale à 30 cm.

La largeur P_{C} des parois latérales 34 peut être comprise entre 40 cm et 80 cm, et de préférence, comprise antre 50 cm et 70 cm. Par exemple, les parois latérales 34 ont une largeur P_{C} sensiblement égale à 60 cm. La hauteur H_{C} des parois latérales 34 peut être comprise entre 20 cm et 50 cm. De préférence, les parois latérales 34 ont une hauteur H_{C} comprise entre 25 cm et 40 cm, par exemple sensiblement égale à 30 cm.

La paroi de cuisson 36 comporte une zone de cuisson, par exemple rectangulaire, destinée à être chauffée.

La paroi de cuisson 36 peut comprendre au moins un orifice de vidange 40 équipé d'une bonde de vidange 44. De préférence, la paroi de cuisson 36 comprend un seul orifice de vidange 40, afin de limiter le nettoyage et de simplifier la cuve de cuisson 24 par rapport à une vidange séparée pour le produit et une vidange pour les eaux de lavage ou de cuisson.

La cuve de cuisson 24 peut également être vidangée en la basculant de sorte à ce que la paroi de fond 36 soit sensiblement verticale.

L'orifice de vidange 40 peut être agencé sur la paroi de fond 36, à proximité de la face avant 30 de la cuve de cuisson 24.

La cuve de cuisson 24 peut être du type mobile, c'est-à-dire qu'elle peut être montée de manière mobile, par exemple basculante, sur l'appareil de cuisine 10 et qu'elle est destinée à être démontée ou à être basculée par exemple pour récupérer les produits de cuisson contenus dans la cuve ou pour sa vidange.

Le fond de la cuve de cuisson 24, et plus précisément la paroi de cuisson 36, peut être configuré pour être mobile entre une première position sensiblement horizontale et une deuxième position légèrement inclinée par rapport à ladite position sensiblement horizontale. Le fond de la cuve de cuisson 24 peut, par exemple, être basculé d'un angle inférieur ou égal à 20°, de préférence d'un angle inférieur ou égal à 10° par rapport à un plan sensiblement horizontal.

Lors de la cuisson, la paroi de cuisson 36 peut être positionnée sensiblement horizontalement, afin de permettre une répartition optimale du contenu de la cuve de cuisson, tel que de la matière grasse utilisée pour la cuisson.

Lors de la vidange de la cuve, la paroi de cuisson 36 peut être basculée par rapport au plan sensiblement horizontal. En particulier, la cuve de cuisson 36 peut être basculée vers la face avant de l'appareil de cuisine 10, c'est-à-dire en direction de l'orifice de vidange 40, afin d'accélérer la vidange et de s'assurer qu'il ne reste pas de produits de cuisson dans le fond de la cuve.

La cuve de cuisson 24 peut également comporter des moyens de blocage 38, ici des excroissances, complémentaires aux moyens de blocage 16 du couvercle, de manière à bloquer le couvercle 12 dans sa position de fermeture de la cuve.

L'appareil de cuisine 10 comprend également des moyens d'alimentation 26 en eau de la cuve de cuisson 24. Les moyens d'alimentation 26 permettent d'alimenter la cuve de cuisson 24 en eau pour la cuisson des produits et pour le nettoyage de la cuve 24 après son utilisation.

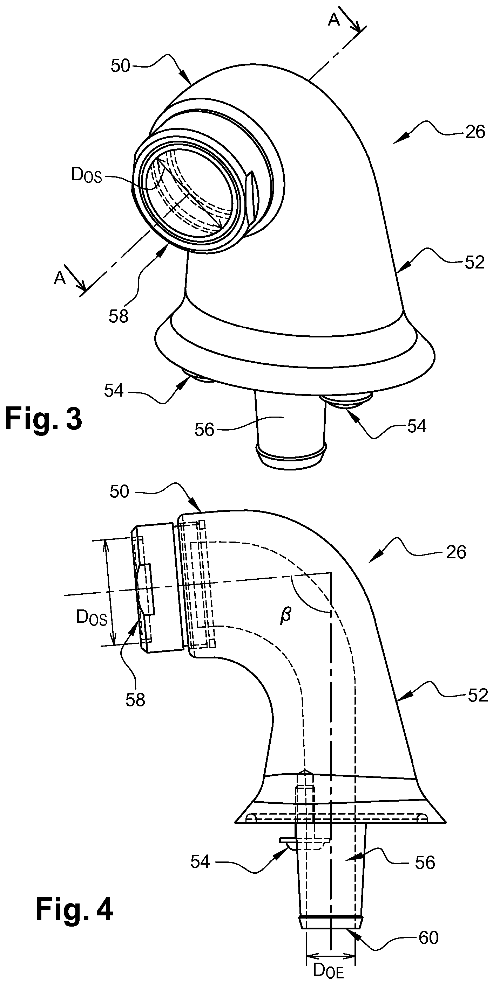

Les figures 3 à 7 représentent plus précisément les moyens d'alimentation 26 de l'appareil de cuisine 10.

Les moyens d'alimentation 26 sont configurés pour projeter un jet d'eau avec un angle déterminé α sur la paroi périphérique de la cuve de cuisson 24, ici l'une des parois avant 30, arrière 32, ou latérales 34 de la cuve 24. En particulier, les moyens d'alimentation 26 n'émettent pas de jet d'eau directement sur la paroi de fond 36.

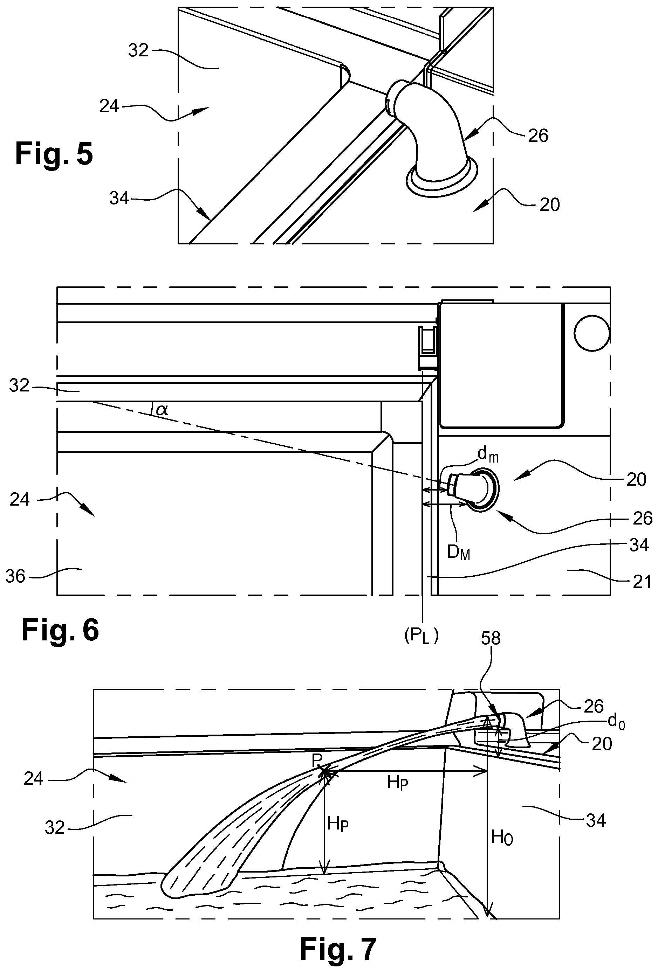

De préférence, comme représenté notamment sur la figure 7, les moyens d'alimentation 26 peuvent être configurés pour projeter un jet d'eau, avec un angle déterminé α, sur la paroi arrière 32 de la cuve de cuisson 24.

Comme représenté sur la figure 6, l'angle déterminé α peut être compris entre 5° et 50°. De préférence, l'angle déterminé α peut être compris entre 10° et 30°, par exemple sensiblement égal à 15°.

Avantageusement, l'angle déterminé est faible de sorte qu'il n'y a aucune éclaboussure lors du remplissage de la cuve, et ce quel que soit le niveau d'eau déjà présent dans la cuve, comme illustré sur la figure 7.

Les moyens d'alimentation 26 peuvent être agencés sur la face supérieure 20 de l'appareil de cuisine 10. De préférence, les moyens d'alimentation 26 sont agencés à proximité de la paroi avant 30, ou d'une des parois latérales 34 de la cuve de cuisson 24. De préférence, les moyens d'alimentation 26 ne sont pas agencés sur la face supérieure 20, au dessus de la paroi arrière 32. Comme représenté sur les figures 5 à 7, les moyens d'alimentation 26 sont agencés sur la face supérieure 20, dans une zone 21 de la face supérieure 20 agencée au dessus d'une paroi latérale 34. En particulier, la zone 21 est une zone sensiblement plane et peut être utilisée comme plan de travail par un utilisateur de l'appareil de cuisine.

Les moyens d'alimentation 26 peuvent être configurés pour fonctionner en mode tout ou rien. Autrement dit, les moyens d'alimentation 26 peuvent soit ne pas alimenter la cuve de cuisson 24 en eau, soit alimenter la cuve en eau avec un débit prédéfini.

Les moyens d'alimentation peuvent être configurés pour fonctionner sur la base de valeurs discrètes de débit prédéterminées. Autrement dit, le débit des moyens d'alimentation 26 peut varier par paliers, chaque palier correspondant à un débit prédéterminé.

L'appareil de cuisine 10 peut être configuré de sorte que les moyens d'alimentation 26 projettent un débit d'eau compris entre 10 L/min, soit environ 1,67x10⁻⁴ m³/s, et 30 L/min, soit 5,0x10⁻⁴ m³/s. De préférence, le débit d'eau des moyens d'alimentation 26 est compris entre 15 L/min, soit 2,5 x10⁻⁴ m³/s, et 25 L/min, soit environ 4,2 x10⁻⁴ m³/s. Plus préférentiellement, les moyens d'alimentation 26 projettent un débit d'eau sensiblement égal à 20 L/min, soit environ 3,3 x10-4 m³/s. Un tel débit des moyens d'alimentation 26 permet un remplissage rapide de la cuve de cuisson 24, sans provoquer d'éclaboussures.

Les choix de l'angle déterminé α entre le jet d'eau et la paroi de la cuve de cuisson 24, de l'orientation du jet d'eau, par exemple sur la paroi arrière 32 de la cuve de cuisson 24 et du débit des moyens d'alimentation 26 permettent avantageusement d'éviter des éclaboussures lors du remplissage en eau de la cuve.

Les moyens d'alimentation 26 peuvent comprendre un élément tubulaire et monobloc, comme représenté sur les figures 3 et 4.

Les moyens d'alimentation 26, et plus précisément l'élément tubulaire et monobloc, peuvent comprendre un bec 50 prolongeant un corps 52. Autrement dit, le bec 50 et le corps 52 peuvent être formés d'une seule pièce.

Le bec 50 et le corps 52 peuvent être sensiblement cylindrique et former un coude. Le bec 50 et le corps 52 forment un angle β supérieur ou égal à 60°. De préférence, l'angle β formé entre le bec 50 et le corps 52 est supérieur ou égal à 70°, par exemple supérieur ou égal à 80° comme représenté sur la figure 4. L'angle β formé entre le bec 50 et le corps 52 est de préférence inférieur ou égal à 90°. Une telle inclinaison des moyens d'alimentation 26 permet d'éviter des éclaboussures lors du remplissage de la cuve 24.

Le bec 50 et le corps 52 peuvent être réalisés dans le même matériau. En variante, le bec 50 et le corps 52 peuvent être réalisés dans des matériaux différents.

Les moyens d'alimentation 26, et plus précisément le corps 52, comportent un orifice d'entrée 60 de l'eau, par lequel l'eau arrive auxdits moyens d'alimentation 26. L'orifice d'entrée 60 peut être de forme ovale ou polygonale, ou circulaire comme représenté sur la figure 3.

Les moyens d'alimentation 26, et plus précisément le bec 50, comportent un orifice de sortie 58, par lequel l'eau est projetée par les moyens d'alimentation 26 dans la cuve de cuisson 24. L'orifice de sortie 58 peut être de forme ovale ou polygonale, ou circulaire comme représenté sur la figure 3.

En particulier, l'orifice de sortie 58 s'étend dans un plan sensiblement perpendiculaire à la paroi de fond 36. Par exemple, comme représenté sur la figure 7, l'orifice de sortie 58 s'étend sensiblement verticalement, tandis que la paroi de fond 36 s'étend sensiblement horizontalement.

Le bec 50 et le corps 52 entourent un conduit 56 par lequel l'eau est acheminée depuis une arrivée d'eau (non représentée) à la cuve de cuisson 24. En particulier, comme représenté sur la figure 4, le conduit 56 s'étend entre l'orifice d'entrée 60 et l'orifice de sortie 58. Le conduit 56 a une forme générale cylindrique, par exemple à base ovale ou polygonale, ou ici circulaire.

Le diamètre D_{OS} de l'orifice de sortie 58 peut être compris entre 1 cm et 6 cm. De préférence, l'orifice de sortie 58 a un diamètre D_{OS} compris entre 2 cm et 5 cm. Par exemple, le diamètre D_{OS} de l'orifice de sortie 58 peut être sensiblement égal à 3 cm. De préférence, le diamètre D_{OS} de l'orifice de sortie 58 correspond au diamètre d'un mousseur, par exemple d'un mousseur de haut débit.

Le diamètre D_{OE} de l'orifice d'entrée 60 peut être compris entre 0,5 cm et 5 cm. De préférence, l'orifice d'entrée 60 a un diamètre D_{OE} compris entre 1 cm et 3 cm. Par exemple, le diamètre D_{OE} de l'orifice d'entrée 60 peut être sensiblement égal à 2 cm. En particulier, le diamètre D_{OE} de l'orifice d'entrée 60 est inférieur au diamètre D_{OS} de l'orifice de sortie 58. De préférence, le diamètre D_{OE} de l'orifice de d'entrée 60 correspond au diamètre de moyens de liaison à l'arrivée d'eau, par exemple au diamètre d'un tuyau relié à l'arrivée d'eau.

Le conduit 56 a un diamètre évoluant progressivement entre l'orifice d'entrée 60 et l'orifice de sortie 58. Autrement dit, le diamètre du conduit 56 peut varier. Par exemple, le diamètre du conduit 56 est plus faible au niveau du corps 52 qu'au niveau du bec 50. Autrement dit, le diamètre du conduit 56 s'élargit en direction de la sortie d'eau. De préférence, le diamètre du conduit 56 évolue de façon continue. Autrement dit, il n'y a pas de variation abrupte du diamètre du conduit 56. De façon avantageuse, l'évolution progressive du diamètre du conduit 56 permet de réduire la vitesse de l'eau passant par le conduit, sans provoquer de perturbations dans le flux.

La distance H_{O} entre l'orifice de sortie 58 et la paroi de fond 36 peut être comprise entre 25 cm et 50 cm. De préférence, la distance H_{O} entre l'orifice de sortie 58 et la paroi de fond 36 est comprise entre 30 cm et 45 cm. Par exemple, l'orifice de sortie 58 et la paroi de fond 36 peuvent être distants d'environ 35 cm.

La plus petite distance d_{O} entre l'orifice de sortie 58 et la cuve de cuisson 24 peut être inférieure ou égale à 20 cm. La plus petite distance d_{O} entre l'orifice de sortie 58 et la cuve de cuisson 24 est la distance entre l'orifice de sortie 58 et la paroi périphérique, ici une paroi latérale 34. De préférence, la distance d_{O} entre l'orifice de sortie 58 et la cuve de cuisson 24 est inférieure ou égale à 15 cm. Par exemple, l'orifice de sortie 58 peut être distant de la cuve de cuisson 24 d'au plus 10 cm.

La plus petite distance D_{M} entre les moyens d'alimentation 26 et le plan P_{L} comprenant la paroi périphérique au niveau de laquelle sont agencés les moyens d'alimentation 26, ici une paroi latérale 34, peut être inférieure ou égale à 20 cm. De préférence, la distance D_{M} entre les moyens d'alimentation 26 et le plan P_{L} comprenant la paroi latérale 34 est inférieure ou égale à 15 cm. Par exemple, les moyens d'alimentation 26 et le plan P_{L} comprenant la paroi latérale 34 peuvent être distants d'environ 10 cm.

La plus petite distance d_{M} entre l'orifice de sortie 58 et le plan P_{L} comprenant la paroi périphérique au niveau de laquelle sont agencés les moyens d'alimentation 26, ici une paroi latérale 34, peut être inférieure ou égale à 20 cm. De préférence, la distance d_{M} entre l'orifice de sortie 58 et le plan P_{L} comprenant la paroi latérale 34 est inférieure ou égale à 15 cm. Par exemple, l'orifice de sortie 58 peut être distant du plan P_{L} comprenant la paroi latérale 34 d'au plus 10 cm.

En particulier, les moyens d'alimentation 26 formant un coude, l'orifice de sortie 58 et le bec 50 des moyens d'alimentation 26 sont plus proches du plan P_{L} comprenant la paroi latérale 34 que l'orifice d'entrée 60 et le corps 52 des moyens d'alimentation 26. Autrement dit, la distance entre l'orifice de sortie 58 et le bec 50 du plan P_{L} comprenant la paroi latérale 34 est inférieure à la distance entre l'orifice d'entrée 60 et le corps 52 du plan P_{L}.

Les moyens d'alimentation 26 peuvent être fixés sur l'appareil de cuisine 10, et plus précisément sur la face supérieure 20 de l'appareil. La fixation des moyens d'alimentation 26 sur l'appareil de cuisine peut être réalisée par soudage, collage, ou bien par vissage au moyen de vis 54 comme visible sur les figures 3 et 4.

Les moyens d'alimentation 26 sont agencés à distance du couvercle 12 lorsque ce dernier est dans sa position de fermeture de la cuve de cuisson 24. En particulier, le couvercle 12 de l'appareil de cuisine 10 pivote devant les moyens d'alimentation. Autrement dit, les moyens d'alimentation 26 ne bloquent pas la fermeture du couvercle 12.

Comme représenté sur la figure 7, le point d'impact P du jet d'eau sur la paroi périphérique, ici la paroi arrière 32, est compris entre 60% et 90% de la hauteur H_{C} de ladite paroi périphérique. Autrement dit, la distance H_{P} entre le point d'impact P du jet d'eau projeté sur la paroi arrière 32 par les moyens d'alimentation 26 et la paroi de fond 36 est comprise entre 60% et 90% de la hauteur H_{C} de la paroi arrière 32. Ici, la paroi de cuisson 36 est à 0% de la hauteur H_{C} de la paroi arrière 32 et la face supérieure 20 est à 100% de la hauteur H_{C} de la paroi arrière 32. Autrement dit, la hauteur H_{C} est mesurée depuis la paroi de fond 36. De préférence, le point d'impact P du jet d'eau sur la paroi périphérique est compris entre 70% et 85% de la hauteur H_{C} de ladite paroi périphérique.

Comme représenté sur la figure 7, le point d'impact P du jet d'eau sur la paroi périphérique, ici la paroi arrière 32, peut être compris entre 10% et 40% de la longueur de ladite paroi périphérique. Autrement dit, la distance L_{P} entre le point d'impact P du jet d'eau projeté sur la paroi arrière 32 par les moyens d'alimentation 26 et la paroi latérale 34 est comprise entre 10% et 40% de la longueur L_{C} de la paroi arrière 32. Ici, la paroi latérale 34 au niveau de laquelle sont agencés les moyens d'alimentation 26 est à 0% de la longueur L_{C} de la paroi arrière 32 et la paroi latérale 34 opposée est à 100% de la longueur L_{C} de la paroi arrière 32. Autrement dit, la longueur L_{C} est mesurée depuis la paroi latérale 34 située au plus proche des moyens d'alimentation 26. De préférence, le point d'impact P du jet d'eau sur la paroi périphérique est compris entre 20% et 30% de la longueur L_{C} de ladite paroi périphérique.

## Revendications

1. Appareil de cuisine (10), en particulier de cuisson, comportant :
- une cuve (24) comprenant au moins une paroi dite de fond (36) et une paroi dite périphérique (30, 32, 34) s'étendant depuis et autour de ladite paroi de fond (36), et
- des moyens d'alimentation (26) en eau pour remplir la cuve,
**caractérisé en ce que** lesdits moyens d'alimentation (26) sont configurés pour projeter un jet d'eau avec un angle déterminé (α) sur ladite paroi périphérique (30, 32, 34) à un point d'impact (P) entre 60% et 90% de la hauteur (H_{C}) de ladite paroi périphérique pour minimiser les éclaboussures générées lors du remplissage de la cuve.

2. Appareil de cuisine (10) selon la revendication 1, dans lequel la cuve (24) est de forme générale parallélépipédique, ladite paroi périphérique comportant une paroi dite avant (30), une paroi dite arrière (32) et deux parois dites latérales (34).

3. Appareil de cuisine (10) selon la revendication 2, comportant une face dite supérieure (20), sensiblement parallèle à ladite paroi de fond (36), lesdits moyens d'alimentation (26) étant agencés sur ladite face supérieure (20) au niveau de ladite paroi avant (30) ou d'une desdites parois latérales (34).

4. Appareil de cuisine (10) selon l'une des revendications 2 ou 3, dans lequel lesdits moyens d'alimentation (26) sont configurés pour projeter un jet d'eau avec un angle déterminé (α) sur ladite paroi arrière (32).

5. Appareil de cuisine (10) selon l'une des revendications précédentes, dans lequel l'angle déterminé (α) est compris entre 5° et 50°, de préférence entre 10° et 30°, par exemple égal à 15°.

6. Appareil de cuisine (10) selon l'une des revendications précédentes, dans lequel lesdits moyens d'alimentation (26) sont configurés pour fonctionner en mode tout ou rien, ou sur la base de valeurs discrètes de débit prédéterminées.

7. Appareil de cuisine (10) selon l'une des revendications précédentes, dans lequel lesdits moyens d'alimentation (26) comprennent un élément tubulaire et monobloc.

8. Appareil de cuisine (10) selon l'une des revendications précédentes, dans lequel lesdits moyens d'alimentation (26) comprennent un bec (50) prolongeant un corps (52), le bec (50) et le corps (52) formant un angle (β) supérieur ou égal à 60°, de préférence supérieur ou égal à 70°, et plus préférentiellement supérieur ou égal à 80°.

9. Appareil de cuisine (10) selon l'une des revendications précédentes, configuré pour que lesdits moyens d'alimentation (26) projettent un débit d'eau compris entre 10 L/min et 30 L/min, de préférence entre 15 L/min et 25 L/min, par exemple égal à 20 L/min.

10. Appareil de cuisine (10) selon l'une des revendications précédentes, dans lequel les moyens d'alimentation (26) comportent un orifice de sortie (58), la distance entre l'orifice de sortie (58) et la paroi de fond (36) étant comprise entre 25 cm et 50 cm, de préférence entre 30 cm et 45 cm, par exemple égal à 35 cm.

11. Appareil de cuisine (10) selon la revendication 10, dans lequel la plus petite distance entre l'orifice de sortie (58) et la cuve (24) est inférieure ou égale à 20 cm, de préférence inférieure ou égale à 15 cm, et plus préférentiellement inférieure ou égale à 10 cm.

12. Appareil de cuisine (10) selon l'une des revendications 10 ou 11, dans lequel l'orifice de sortie (58) s'étend dans un plan sensiblement perpendiculaire à la paroi de fond (36).

13. Appareil de cuisine (10) selon l'une des revendications 10 à 12, dans lequel les moyens d'alimentation (26) comprennent un orifice d'entrée (60) de diamètre inférieur à celui de l'orifice de sortie (58) et un conduit (56) s'étendant entre lesdits orifices d'entrée (60) et de sortie (58), ledit conduit (56) ayant un diamètre évoluant progressivement entre ledit orifice d'entrée (60) et ledit orifice de sortie (58).

14. Appareil de cuisine (10) selon l'une des revendications précédentes, dans lequel le point d'impact (P) du jet d'eau sur la paroi périphérique (30, 32, 34) est compris entre 70% et 80% de la hauteur (H_{C}) de ladite paroi périphérique.

15. Appareil de cuisine (10) selon l'une des revendications l'une des revendications précédentes , dans lequel le point d'impact (P) du jet d'eau sur la paroi périphérique (30, 32, 34) est compris entre 10% et 40% de la longueur (L_{C}) de ladite paroi périphérique, de préférence entre 20% et 30%.

## Patentansprüche

1. Küchengerät (10), insbesondere zum Kochen, Folgendes aufweisend:
- eine Wanne (24), die zumindest eine "untere" Wand (36) und eine "umlaufende" Wand (30, 32, 34) aufweist, die sich von der und um die Bodenwand (36) erstreckt, und
- Wasserzuführeinrichtungen (26) zum Befüllen der Wanne,
**dadurch gekennzeichnet, dass** die Zuführeinrichtungen (26) so ausgebildet sind, dass sie einen Wasserstrahl unter einem vorbestimmten Winkel (a) auf die umlaufende Wand (30, 32, 34) auf einen Auftreffpunkt (P) zwischen 60 % und 90 % der Höhe (He) der umlaufenden Wand richten, um Spritzer zu minimieren, die erzeugt werden, wenn die Wanne gefüllt wird.

2. Küchengerät (10) nach Anspruch 1, bei dem die Wanne (24) im Allgemeinen die Form eines Parallelepipeds aufweist, wobei die umlaufende Wand eine "vordere" Wand (30), eine "hintere" Wand (32) und zwei "Seiten"-Wände (34) umfasst.

3. Küchengerät (10) nach Anspruch 2, eine "obere" Fläche (20) aufweisend, die im Wesentlichen parallel zur Bodenwand (36) angeordnet ist, wobei die Zuführeinrichtungen (26) auf der oberen Fläche (20) an der vorderen Wand (30) oder an einer der Seitenwände (34) angeordnet sind.

4. Küchengerät (10) nach einem der Ansprüche 2 oder 3, bei dem die Zuführeinrichtungen (26) so ausgebildet sind, dass sie einen Wasserstrahl in einem vorbestimmten Winkel (a) auf die hintere Wand (32) richten.

5. Küchengerät (10) nach einem der vorhergehenden Ansprüche, bei dem der bestimmte Winkel (a) zwischen 5° und 50°, vorzugsweise zwischen 10° und 30°, beispielsweise gleich 15°, beträgt.

6. Küchengerät (10) nach einem der vorhergehenden Ansprüche, bei dem die Zuführeinrichtungen (26) so ausgebildet sind, dass sie in einem Ein-Aus-Modus oder basierend auf voreingestellten diskreten Durchflusswerten arbeiten.

7. Küchengerät (10) nach einem der vorhergehenden Ansprüche, bei dem die Zuführeinrichtungen (26) eine einteilige rohrförmige Komponente aufweisen.

8. Küchengerät (10) nach einem der vorhergehenden Ansprüche, bei dem die Zufuhreinrichtungen (26) eine Tülle (50) aufweisen, die sich über einen Körper (52) erstreckt, wobei die Tülle (50) und der Körper (52) einen Winkel (3) größer oder gleich 60°, vorzugsweise größer oder gleich 70° und mehr bevorzugt größer oder gleich 80° bilden.

9. Küchengerät (10) nach einem der vorhergehenden Ansprüche, das so ausgebildet ist, dass die Zuführeinrichtungen (26) einen Wasserstrom von zwischen 10 l/min und 30 l/min, vorzugsweise zwischen 15 l/min und 25 l/min, beispielsweise gleich 20 l/min, ausstoßen.

10. Küchengerät (10) nach einem der vorhergehenden Ansprüche, bei dem die Zuführeinrichtungen (26) eine Auslassöffnung (58) aufweisen, wobei der Abstand zwischen der Auslassöffnung (58) und der Bodenwand (36) zwischen 25 cm und 50 cm, vorzugsweise zwischen 30 cm und 45 cm, zum Beispiel gleich 35 cm, beträgt.

11. Küchengerät (10) nach Anspruch 10, bei dem der kleinste Abstand zwischen der Auslassöffnung (58) und der Wanne (24) kleiner oder gleich 20 cm, vorzugsweise kleiner oder gleich 15 cm und mehr bevorzugt kleiner oder gleich 10 cm ist.

12. Küchengerät (10) nach einem der Ansprüche 10 oder 11, bei dem sich die Auslassöffnung (58) in einer Ebene erstreckt, die im Wesentlichen senkrecht
zur Bodenwand (36) angeordnet ist.

13. Küchengerät (10) nach einem der Ansprüche 10 bis 12, bei dem die Zuführeinrichtungen (26) eine Einlassöffnung (60) mit einem kleineren Durchmesser als dem der Auslassöffnung (58) und eine Leitung (56) aufweisen, die sich zwischen der Einlassöffnung (60) und der Auslassöffnung (58) erstreckt, wobei die Leitung (56) einen zwischen der Einlassöffnung (60) und der Auslassöffnung (58) allmählich zunehmenden Durchmesser aufweist.

14. Küchengerät (10) nach einem der vorhergehenden Ansprüche, bei dem der Auftreffpunkt (P) des Wasserstrahls auf der umlaufenden Wand (30, 32, 34) bei zwischen 70 % und 80 % der Höhe (He) der umlaufenden Wand liegt.

15. Küchengerät (10) nach einem der vorhergehenden Ansprüche, bei dem der Auftreffpunkt (P) des Wasserstrahls auf der umlaufenden Wand (30, 32, 34) bei zwischen 10 % und 40 % der Länge (L_{c}) der umlaufenden Wand, vorzugsweise zwischen 20 % und 30 %, liegt.

## Claims

1. A kitchen appliance (10), in particular for cooking, comprising:
- a vat (24) comprising at least one "bottom" wall (36) and a "peripheral" wall (30, 32, 34) extending from and around said bottom wall (36), and
- water supply means (26) for filling the vat,
**characterized in that** said supply means (26) are configured to project a jet of water at a predetermined angle (a) onto said peripheral wall (30, 32, 34) to an impact point (P) between 60% and 90% of the height (He) of said peripheral wall to minimize splashes generated when the vat is being filled.

2. The kitchen appliance (10) according to claim 1, in which the vat (24) is generally parallelepipedal in shape, said peripheral wall comprising a "front" wall (30), a "rear" wall (32) and two "side" walls (34).

3. The kitchen appliance (10) according to claim 2, comprising a "top" face (20), substantially parallel to said bottom wall (36), said supply means (26) being arranged on said top face (20) on said front wall (30) or on one of said side walls (34).

4. The kitchen appliance (10) according to any of claims 2 or 3, in which said supply means (26) are configured to project a jet of water at a predetermined angle (a) onto said rear wall (32).

5. The kitchen appliance (10) according to any of the preceding claims, in which the determined angle (a) is comprised between 5° and 50°, preferably between 10° and 30°, for example equal to 15°.

6. The kitchen appliance (10) according to any of the preceding claims, in which said supply means (26) are configured to operate in on-off mode, or on the basis of preset discrete flow values.

7. The kitchen appliance (10) according to any of the preceding claims, in which said supply means (26) comprise a one-piece tubular component.

8. The kitchen appliance (10) according to any of the preceding claims, in which said supply means (26) comprise a spout (50) extending a body (52), the spout (50) and the body (52) forming an angle (3) greater than or equal to 60°, preferably greater than or equal to 70°, and more preferentially greater than or equal to 80°.

9. The kitchen appliance (10) according to any of the preceding claims, configured so that said supply means (26) project a water flow comprised between 10 L/min and 30 L/min, preferably between 15 L/min and 25 L/min, for example equal to 20 L/min.

10. The kitchen appliance (10) according to any of the preceding claims, in which the supply means (26) comprise an outlet port (58), the distance between the outlet port (58) and the bottom wall (36) being comprised between 25 cm and 50 cm, preferably between 30 cm and 45 cm, for example equal to 35 cm.

11. The kitchen appliance (10) according to claim 10, in which the smallest distance between the outlet port (58) and the vat (24) is less than or equal to 20 cm, preferably less than or equal to 15 cm, and more preferentially less than or equal to 10 cm.

12. The kitchen appliance (10) according to any of claims 10 or 11, in which the outlet port (58) extends in a plane substantially perpendicular to the bottom wall (36).

13. The kitchen appliance (10) according to any of claims 10 to 12, in which the supply means (26) comprise an inlet port (60) with a smaller diameter than that of the outlet port (58) and a conduit (56) extending between said inlet port (60) and said outlet port (58), said conduit (56) having a gradually increasing diameter between said inlet port (60) and said outlet port (58).

14. The kitchen appliance (10) according to any of the preceding claims, in which the impact point (P) of the water jet on the peripheral wall (30, 32, 34) is comprised between 70% and 80% of the height (He) of said peripheral wall.

15. The kitchen appliance (10) according to any of the preceding claims, in which the impact point (P) of the water jet on the peripheral wall (30, 32, 34) is comprised between 10% and 40% of the length (L_{c}) of said peripheral wall, preferably between 20% and 30%.
